# EUROPÄISCHE PATENTSCHRIFT

(11) **EP 1 827 770 B1**
(45) Veröffentlichungstag und Bekanntmachung des Hinweises auf die Patenterteilung: **12.08.2009**
(21) Anmeldenummer: 05818327.8
(22) Anmeldetag: 06.12.2005
(51) Int. Cl.: B26B 13/26, A01G 3/02, B23D 21/06, B23D 29/02

(54) **SCHERE, INSBESONDERE HECKENSCHERE**
CLIPPERS, ESPECIALLY HEDGE CLIPPERS
CISAILLE, EN PARTICULIER TAILLE-HAIE

(30) Priorität: 17.12.2004 DE 102004060722
(43) Veröffentlichungstag der Anmeldung: 05.09.2007
(73) Patentinhaber: GARDENA Manufacturing GmbH, 89079 Ulm (DE)
(72) Erfinder: BROBEIL, Achim, 89160 Dornstadt (DE); KEIM, Norbert, 89281 Altenstadt (DE)
(86) Internationale Anmeldenummer: PCT/EP2005/013064
(87) Internationale Veröffentlichungsnummer: WO 2006/066728

(56) Entgegenhaltungen:
- EP-A- 0 824 999
- EP-A- 1 153 713
- DE-A1- 4 023 559
- JP-A- 53 057 583
- US-A- 1 065 753
- US-A- 4 599 795
- US-A1- 2002 073 555
- US-A1- 2002 083 809

## Beschreibung

Die Erfindung betrifft eine über zwei Griffarme handbetätigte Schere, insbesondere eine Heckenschere.

Einfach aufgebaute Scheren bestehen aus lediglich zwei in einem Scherengelenk gelenkig verbundenen Armen, an welchen bezüglich des Gelenks entgegen gesetzt jeder Arm eine Klinge und einen Handgriff aufweiset. Zur Kraftverstärkung ist es bekannt, wenigstens einen der Arme aufzuteilen in einen Scherenarm und einen Griffarm und deren Verschwenkung über ein Getriebe zu koppeln.

In der EP 0 824 999 B1 ist eine Astschere beschrieben, bei welchem ein erster der Arme aus einem mit dem zweiten Arm in einem Scherengelenk drehbar verbundenen Scherenarm und einem an diesem gelenkig angeordneten Griffarm besteht, wobei der Griffarm über ein Zahngetriebe mit dem zweiten Arm gekoppelt ist. Bei einer aus der DE 40 23 559 A1 bekannten Schere mit einem solchen Zahngetriebe ist die Klinge an dem zweiten Arm schwenkbar befestigt und gleitet zur Erzielung eines ziehenden Schnittes in einer Kulissenführung. In der EP 1153713A1 ist eine Heckenschere mit weitgehend symmetrischem Auf bau beschrieben, bei welcher beide Arme in je einen Scherenarm und einen Griffarm unterteilt und über je eines von zwei Zahngetrieben wechselseitig gekoppelt sind.

Die Zahngetriebe bei derartigen Scheren sind besonders vorteilhaft zur Erzielung hoher Kraftübersetzungen. Je nach Ausführung kann im Zahngetriebe aber ein Führungsspiel zwischen den ineinandergreifenden Strukturen oder eine erhöhte Reibung auftreten, was bei der symmetrischen bekannten Schere mit zwei Zahngetrieben verstärkt in Erscheinung tritt.

Der Erfindung liegt die Aufgabe zugrunde, eine vorteilhafte neue handbetätigte Schere mit einem Getriebe anzugeben.

Die Erfindung ist im unabhängigen Anspruch 1 beschrieben. Die abhängigen Ansprüche enthalten vorteilhafte Ausgestaltungen und Weiterbildungen der Erfindung.

Die Erfindung verbindet die vorteilhaften kraftübersetzenden Eigenschaften der an sich bekannten einzelnen Zahngetriebeanordnung mit einem weiteren bewegungskoppelnden Hebel und erweitert dadurch auf vorteilhafte Weise die mechanischen, Gestaltungsmöglichkeiten. Insbesondere kann durch den Hebel auch bei unsymmetrischer Ausführung mit nur einem Zahngetriebe durch den zusätzlichen Hebel eine weitgehend symmetrische Bewegung von Scherenarmen und Griffarmen erreicht werden. Der Hebel kann zusätzlich die Kraftverstärkung des Getriebes noch erhöhend unterstützen. In einer Weiterbildung mit einer veränderlichen Anlenkposition des Hebels kann auch auf einfache Weise die Kraftverstärkung der Getriebe-Hebel-Kombination veränderlich einstellbar sein.

Die Erfindung ist nachfolgend anhand eines bevorzugten Ausführungsbeispiels unter Bezugnahme auf die Abbildungen noch eingehend veranschaulicht. Dabei zeigt:
- Fig. 1: eine Ansicht auf eine geschlossene Schere,
- Fig. 2: die Schere nach Fig. von der entgegen gesetzten Seite,
- Fig. 3: die Schere nach Fig. 1 in geöffnetem Zustand.

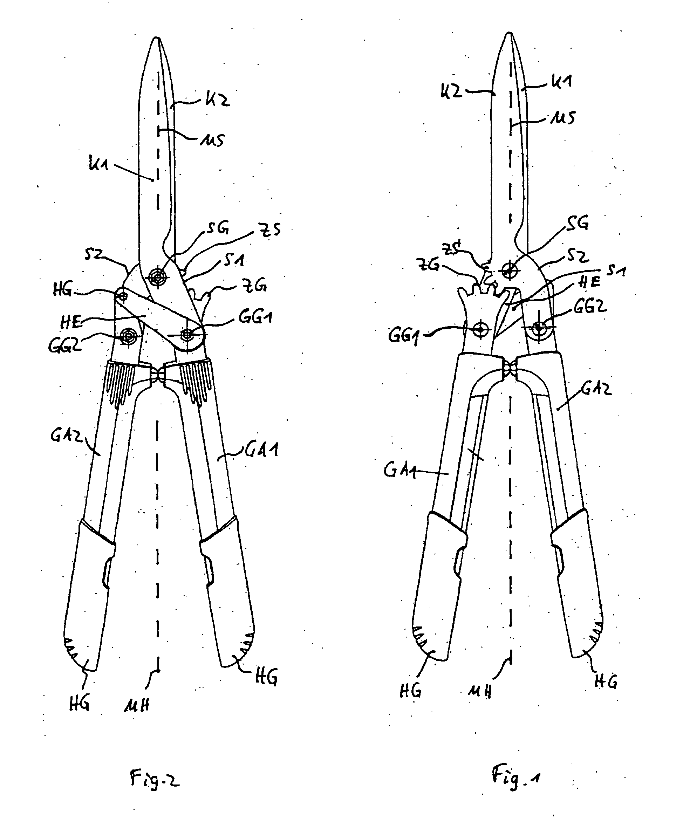

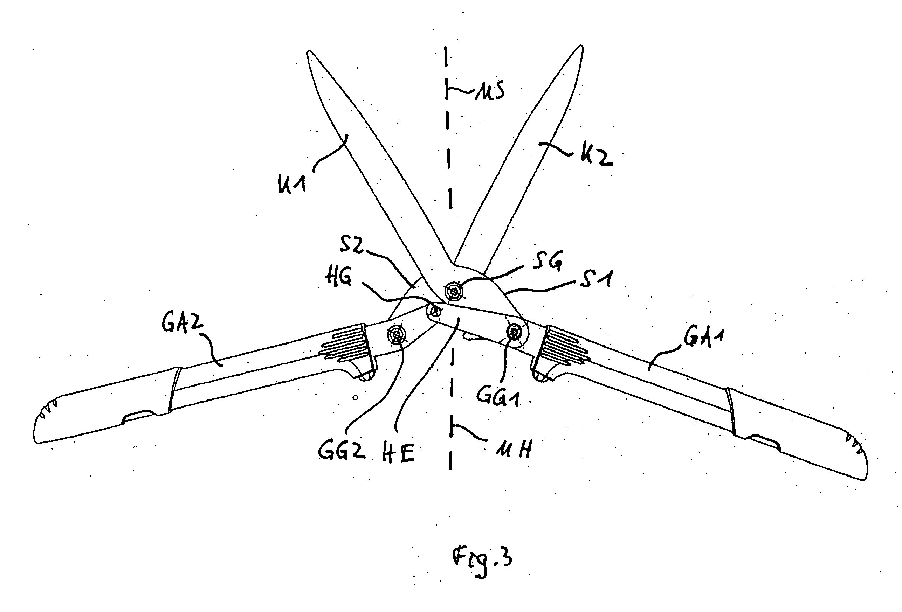

Fig. 1 zeigt in Draufsicht eine erfindungsgemäße Schere in Form einer Heckenschere in geschlossenem Zustand. In Fig. 2 ist dieselbe Schere von der entgegen gesetzten Seite her gezeigt. Die Fig. 3 zeigt die Schere in maximal geöffnetem Zustand.

Die Schere enthält zwei Scherenarme S1 und S2, welche in einem Scheren gelenk SG drehbar miteinander verbunden sind, sowie zwei Griffarme GA1 und GA2 zur Betätigung der Schere. Die Scherenarme enthalten jeweils eine Schneidklinge K1 bzw. K2 und einen bezüglich des Scherengelenks den Schneidklingen abgewandten Armabschnitt, an welchem jeweils einer der beiden Griffarme in einem nachfolgend als Griffgelenk bezeichneten Drehgelenk GG1 bzw. GG2 mit dem jeweiligen Scherenarm verbunden ist. Der erste Scherenarm GA1 trägt an seinem bezüglich des Griffgelenks GG1 einem Handgriff HG abgewandten Ende eine erste Zahnstruktur ZG, welche mit einer zweiten Zahnstruktur ZS an dem zweiten Scherenarm S2 in Eingriff steht und ein Zahngetriebe für die Betätigung der Schere bildet. Solche Zahngetriebe bei handbetätigten Scheren sind aus dem eingangs genannten Stand der Technik an sich bekannt.

Der zweite Griffarm GA2 weist bezüglich des Griffgelenks GG2 einem Handgriff HG abgewandt und von dem Griffgelenk GG2 beabstandet ein nachfolgend als Hebelgelenk HG bezeichnetes Drehgelenk auf, an welchem ein Koppelhebel HE drehbar angelenkt ist. Der Koppelhebel ist des weiteren an dem Griffgelenk GG1 drehbar angelenkt.

In Fig. 1 bis Fig. 3 sind auch jeweils mit unterbrochenen Linien eine Mittellinie MH als Symmetrieebene zwischen den beiden Griffarmen GA1 und GA2 und eine Mittelebene MS als ungefähre Symmetrieebene zwischen Schneidklingen K1 und K2 eingezeichnet. Da die Griffarme an ihren den Handgriffen HG abgewandten Enden nicht und an ihren die Handgriffe HG tragenden Enden nicht notwendig symmetrisch ausgebildet sind, ist die Mittelebene MH nur als ungefähre Hilfslinie in den Zeichnungen zu betrachten. Entsprechendes gilt für die Mittelebenen MS der Schneidklingen, welche nicht notwendigerweise spiegelbildlich ausgeführt sind.

In Fig. 1 und 2 im geschlossenen Zustand der Sichere liegen die beiden Mittelebenen in einer ersten definierten Ausrichtung zueinander, insbesondere im wesentlichen miteinander fluchtend. Durch den Koppelhebel ergibt sich trotz der unsymmetrischen Ausführung der Verkopplung der mehreren Arme mit insbesondere nur einem Zahngetriebe vorteilhafterweise auch in der maximalen Endstellung der geöffneten Schere nach Fig. 3 eine im wesentlichen gleiche relative Ausrichtung der beiden Mittelebenen MH und MS. Die Schere zeigt damit für den Benutzer wiederum, an sich wie die Schere mit dem zweifache Zahngetriebe aus dem Stand der Technik, ein weitgehend symmetrisches Verhalten beim Öffnen und Schließen.

Die relativen Ausrichtungen der beiden Mittelebenen MS und MH unterscheiden sich in der geschlossenen und der maximal geöffneten Position vorteilhafterweise um weniger als 10°, insbesondere um weniger als 5°. In Zwischenpositionen während des Vorgangs des Öffnens und Schließens der Schere kann die relative Ausrichtung der beiden Mittelebenen geringfügig stärker variieren, was aber wenig auffällig ist und die Arbeit mit der Schere nicht beeinträchtigt. Das im wesentlichen symmetrische Verhalten der Öffnung der Schneidklingen und der Öffnung der Griffarme kann über die Dimensionierung und Positionierung des Koppelhebels HE und dessen Anlenkpunkte eingestellt werden. Diese Parameter erlauben auch eine Beeinflussung der Kraftübersetzung zwischen der Hebelbetätigung und den Schneidklingen. Der Koppelhebel kann in anderer Ausführung auch dazu dienen, gezielt eine gewünschte Unsymmetrie der Bewegung von Griffarmen und Schneidklingen einzustellen. Der Koppelhebel HE greift nicht zwingenderweise an dem Griffgelenk GG1 an. Dieser Anlenkpunkt des Griffhebels kann auch gegen das Griffgelenk GG1 versetzt an dem ersten Griffarm GA1 oder dem ersten Scherenarm S1 zwischen Scherengelenk SG und Griffgelenk GG1 liegen. Die Anlenkung des Koppelhebels HE an dem Griffgelenk GG1 ist aber durch die Mehrfachausnutzung desselben Gelenks besonders vorteilhaft.

In einer Weiterbildung kann vorgesehen sein, dass wenigstens einer der beiden Anlenkpunkte des Koppelhebels HE, insbesondere das Hebelgelenk HG, zwischen mehreren Positionen verstellbar sein kann, so dass der Benutzer selbst zwischen verschiedenen Kraftübersetzungsverhältnissen wählen kann. Die bevorzugte Symmetrie der Bewegung der Griffarme und der Schneidklingen bleibt dabei im Regelfall nicht erhalten.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Schere, insbesondere Heckenschere, mit einem ersten und einem zweiten Scherenarm, welche relativ zueinander schwenkbar in einem Scherengelenk (SG) verbunden sind, mit einem ersten Griffarm (GA1), welcher in einem ersten Griffgelenk (GG1) gelenkig mit dem ersten Scherenarm (S1) verbunden und über ein Zahngetriebe (ZG, ZS) mit dem zweiten Scherenarm (S2) gekoppelt ist, und mit einem mit dem zweiten Scherenarm (S2) verbundenen zweiten Griffarm (GA2), **dadurch gekennzeichnet, dass** ein Hebel (HE) den zweiten Griffarm (GA2) mit dem ersten Griffarm (GA1) und/oder dem ersten Scherenarm (S1) koppelt und an beiden Hebelenden in einem ersten (GG1) bzw. zweiten Hebelgelenk (HG) drehbar angelenkt ist.

2. Schere nach Anspruch 1, **dadurch gekennzeichnet, dass** der zweite Griffarm (GA2) in einem zweiten Griffgelenk (GG2) gelenkig mit dem zweiten Scherenarm (S2) verbunden ist.

3. Schere nach Anspruch 1 oder 2, **dadurch gekennzeichnet, dass** das erste Hebelgelenk mit dem den ersten Griffarm und den ersten Scherenarm verbindenden Griffgelenk (GG1) zusammenfällt.

4. Schere nach Anspruch 2 oder 3, **dadurch gekennzeichnet, dass** das zweite Hebelgelenk (HG) an dem zweiten Griffarm (GA2) auf der dem Handgriff abgewandten Seite des zweiten Griffgelenks (GG2) angeordnet ist.

5. Schere nach einem der Ansprüche 1 bis 4, **dadurch gekennzeichnet, dass** wenigstens eines der beiden Hebelgelenke (HG) veränderlich positionierbar ist.

6. Schere nach einem der Ansprüche 1 bis 5, **dadurch gekennzeichnet, dass** eine Scherenarm-Mittelebene (MS) und eine Griffarm-Mittelebene (MH) im geschlossenen und im maximal geöffneten Zustand der Schere im wesentlichen gleich zueinander ausgerichtet sind.

7. Schere nach Anspruch 6, **dadurch gekennzeichnet, dass** die beiden Mittelebenen im geschlossenen und im maximal geöffneten Zustand der Schere im wesentlichen miteinander fluchten.

## Claims

1. Shears, in particular hedge shears, having a first shears arm and a second shears arm, which are connected such that they can be pivoted relative to one another at a shears joint (SG), having a first handle arm (GA1), which is connected to the first shears arm (S1) in an articulated manner at a first handle joint (GG1) and is coupled to the second shears arm (S2) via a toothed gear mechanism (ZG, ZS), and having a second handle arm (GA2), which is connected to the second shears arm (S2), **characterized in that** a lever (HE) couples the second handle arm (GA2) to the first handle arm (GA1) and/or to the first shears arm (S1) and is articulated in a rotatable manner at the two lever ends at a first lever oint (GG1) and a second lever joint (HG).

2. Shears according to Claim 1, **characterized in that** the second handle arm (GA2) is connected to the second shears arm (S2) in an articulated manner at a second handle joint (GG2).

3. Shears according to Claim 1 or 2, **characterized in that** the first lever joint coincides with the handle joint (GG1) connecting the first handle arm and the first shears arm.

4. Shears according to Claim 2 or 3, **characterized in that** the second lever joint (HG) is arranged on the second handle arm (GA2) on that side of the second handle joint (GG2) which is directed away from the handle.

5. Shears according to one of Claims 1 to 4, **characterized in that** at least one of the two lever joints (HG) can be changed in position.

6. Shears according to one of Claims 1 to 5, **characterized in that** a shears-arm centre plane (MS) and a handle-arm centre plane (MH) are positioned essentially identically in relation to one another in the closed state and in the fully open state of the shears.

7. Shears according to Claim 6, **characterized in that** the two centre planes are essentially aligned with one another in the closed state and in the fully open state of the shears.

## Revendications

1. Cisaille, en particulier taille-haie, avec un premier et un deuxième bras de cisaille, reliés de façon pivotante l'un par rapport à l'autre dans une articulation de cisaille (SG), avec un premier bras de préhension (GA1) relié de façon articulée dans une première articulation de préhension (GG1) au premier bras de cisaille (S1) et couplé au deuxième bras de cisaille (S2) par l'intermédiaire d'un engrenage denté (ZG, ZS), et avec un deuxième bras de préhension (GA2) relié au deuxième bras de cisaille (S2), **caractérisée en ce qu'**un levier (HE) couple le deuxième bras de préhension (GA2) au premier bras de préhension (GA1) et/ou au premier bras de cisaille (S1) et est relié de façon articulée et pivotante aux deux extrémités de levier dans une première (GG1) et/ou une deuxième articulation de levier (HG).

2. Cisaille selon la revendication 1, **caractérisée en ce que** le deuxième bras de préhension (GA2) est relié de façon articulée au deuxième bras de cisaille (S2) dans une deuxième articulation de préhension (GG2).

3. Cisaille selon la revendication 1 ou 2, **caractérisée en ce que** la première articulation de levier coïncide avec l'articulation de préhension (GG1) reliant le premier bras de préhension et le premier bras de cisaille.

4. Cisaille selon la revendication 2 ou 3, **caractérisée en ce que** la deuxième articulation de levier (HG) est disposée au niveau du deuxième bras de préhension (GA2) sur le côté opposé à la poignée de la deuxième articulation de préhension (GG2).

5. Cisaille selon l'une quelconque des revendications 1 à 4, **caractérisée en ce qu'**au moins une des deux articulations de levier (HG) est positionnée de façon variable.

6. Cisaille selon l'une quelconque des revendications 1 à 5, **caractérisée en ce qu'**un plan médian de bras de cisaille (MS) et un plan médian de bras de préhension (MH) sont ajustés pour l'essentiel à l'identique l'un sur l'autre à l'état de fermeture et d'ouverture maximale de la cisaille.

7. Cisaille selon la revendication 6, **caractérisée en ce que** les deux plans médians s'alignent pour l'essentiel l'un sur l'autre à l'état de fermeture et d'ouverture maximale de la cisaille.
